# EUROPÄISCHE PATENTSCHRIFT

(11) **EP 1 074 459 B1**
(45) Veröffentlichungstag und Bekanntmachung des Hinweises auf die Patenterteilung: **02.03.2005**
(21) Anmeldenummer: 00113493.1
(22) Anmeldetag: 26.06.2000
(51) Int. Cl.: B62D 65/00

(54) **Fertigungsstrasse**
Production line
Ligne de fabrication

(30) Priorität: 04.08.1999 DE 19936607
(43) Veröffentlichungstag der Anmeldung: 07.02.2001
(73) Patentinhaber: Bayerische Motoren Werke Aktiengesellschaft, 80809 München (DE)
(72) Erfinder: Heissenhuber, Rudolf, 94562 Oberpöring (DE)

(56) Entgegenhaltungen:
- EP-A- 0 526 863
- DE-A- 4 404 422

## Beschreibung

Die Erfindung bezieht sich auf eine Fertigungsstraße zur schrittweisen Bauteilebearbeitung, insbesondere zum schrittweisen Zusammenbau von Kraftfahrzeug-Rohkarosserien, nach dem Oberbegriff des Patentanspruchs 1.

Bei bekannten Fertigungsstraßen dieser Art, wie sie in Form sogenannter Shuttle-Anlagen zum sukzessiven Zusammenschweißen von Kraftfahrzeug-Rohkarosserien zum Einsatz kommen, werden die Fahrzeugkarosserien in der Weise von der einen zur nächsten Arbeitsstation transportiert, daß sie nach Beendigung eines Bearbeitungsvorgangs mittels eines Bauteilträgers vertikal aus der an der Arbeitsstation befindlichen Verriegelungseinheit ausgehoben, dann horizontal zur nachfolgenden Arbeitsstation transportiert und anschießen abgesenkt und dabei an die dortige Verriegelungseinheit für den nächsten Bearbeitungsschritt übergeben werden, woraufhin der Bauteilträger - nunmehr im unbeladenen, abgesenkten Zustand - zu der zuvor verlassenen Arbeitsstation zurückbefördert wird. Dabei ist es aus Gründen einer hohen Fertigungsgenauigkeit erforderlich, die Rohkarosserien lagegenau zu positionieren, und zu diesem Zweck müssen die Verriegelungseinheiten und die Bauteilträger jeweils mit karosseriespezifischen Aufnahmeeinrichtungen bzw. Halterungen ausgestattet sein.

Um mit derartigen Anlagen unterschiedliche Karosserietypen zusammenbauen zu können, sind die Verriegelungseinheiten nach der DE 41 13 295 A1 jeweils nach Art eines drehpositionierbaren Trommelmagazins ausgebildet, an welchem in Trommelumfangsrichtung zueinander versetzt mehrere, bautypenmäßig unterschiedliche Aufnahmeeinrichtungen angeordnet sind, von denen die für den jeweiligen Karosserietyp benötigte Aufnahmeeinrichtung durch entsprechende Drehlagensteuerung des Trommelmagazins im Zuge der Fertigungsstraße positioniert wird.

Ferner sind Fertigungsstraßen für Fahrzeugkarosserien in Form sogenannter Skid-Anlagen bekannt, bei denen die Bauteilträger nur in Fertigungsrichtung durch die Anlage transportiert und von der letzten Arbeitsstation über einen zumeist unterhalb der Fertigungsstraße liegenden Rückführtunnel wieder zum Einlaßbereich der Anlage zurückbefördert und dort erneut in die Fertigungsstraße eingeschleust werden. Solche Skid-Anlagen müssen zusätzlich zur eigentlichen Fertigungsstraße mit einem separaten Rückführpfad einschließlich eines Rückförderers und ein- und auslaßseitigen Übergabeeinrichtungen für die rezirkulierten Bauteilträger ausgestattet sein und erfordern einen dementsprechend hohen Bauaufwand und Einbauraum, der häufig nicht zur Verfügung steht. Bei der aus der gattungsgemäßen DE 35 00 742 A1 bekannten Skid-Anlage dieser Art sind an den einzelnen Arbeitsstationen linear verfahrbare Verriegelungseinheiten angeordnet, auf denen sich hintereinanderliegend mehrere, bautypenmäßig unterschiedliche Aufnahmeeinrichtungen befinden, so daß durch eine entsprechende Verschiebung der Verriegelungseinheit die zu dem jeweiligen Karosseriemodell passende Aufnahmeeinrichtung ausgewählt werden kann.

Der geschilderte Stand der Technik läßt jedoch unberücksichtigt, daß bei einem Modellwechsel nicht nur die Aufnahmeeinrichtungen an den einzelnen Arbeitsstationen, sondern auch die Bauteilträger bzw. deren Halterungen ausgetauscht werden müssen, um eine hohe Fertigungsgenauigkeit sicherzustellen, wobei das Auswechseln der Bauteilträger oder Umrüsten auf andere, bautypenspezifische Halterungen ein zeitraubender Vorgang ist, der zu einer höchst unerwünschten Produktionsunterbrechung führt, oder im Falle eines Skid-Systems eine aufwendige Bevorratung und Steuerung einer Vielzahl von typenmäßig unterschiedlichen Bauteilträgem außerhalb der eigentlichen Fertigungsstraße erforderlich macht.

Aufgabe der Erfindung ist es, eine Fertigungsstraße der eingangs genannten Art so auszubilden, daß ein Bautypen- oder Modellwechsel auf konstruktiv und steuerungsmäßig einfache, platzsparende Weise ohne Unterbrechung des Bearbeitungsprozesses und ohne Beeinträchtigung der Fertigungsgenauigkeit ermöglicht wird.

Diese Aufgabe wird durch die im Patentanspruch 1 gekennzeichnete Fertigungsstraße gelöst

Erfindungsgemäß wird unter Beibehalt der Vorteile eines Shuttle-Systems ein automatischer Modellwechsel während des laufenden Fertigungsprozesses in der Weise erreicht, daß jede Verriegelungseinheit zusätzlich zu einem Satz typenmäßig unterschiedlicher Aufnahmeeinrichtungen auch zu diesen in fester Zuordnung und an jeweils gleichen Positionen der Verriegelungseinheit eine entsprechende Anzahl von Bauteilträgern mit typenmäßig mit der zugeordneten Aufnahmeeinrichtung übereinstimmenden Halterungen enthält und so allein durch sukzessive Umsteuerung der Verriegelungseinheiten nicht nur die bei einem Modellwechsel benötigten Aufnahmeeinrichtungen, sondern gemeinsam mit diesen auch die entsprechenden Bauteilträger nacheinander im Fertigungstakt aktiviert und zugleich die dann nicht mehr erforderlichen Aufnahmeeinrichtungen und Bauteilträger aus dem Fertigungsprozeß ausgeschleust werden, wodurch ohne umständliches Umrüsten und mit sehr geringem Bau- und Steuerungsaufwand eine modellvariable, hochgenaue Bauteilbearbeitung nach dem Shuttle-Prinzip ermöglicht wird, mit dem weiteren Effekt, daß die erfindungsgemäße Fertigungsstraße infolge der gedrängten Unterbringung von Aufnahmeeinrichtungen und Bauteilträgern an den einzelnen Verriegelungseinheiten und des Verzichts auf komplizierte, großräumige Wechselmechanismen über eine äußerst platzsparende und störunanfällige Bauweise verfügt und sich bereits vorhandene, herkömmliche Shuttle-Anlagen zumeist problemlos auf die erfindungsgemäße Weise umrüsten lassen.

Eine konstruktiv besonders günstige Ausgestaltung der Erfindung besteht nach Anspruch 2 darin, daß die Verriegelungseinheiten nach Art eines drehpositionierbaren Trommelmagazins ausgebildet sind und an in Trommelumfangsrichtung aufeinanderfolgenden Stellen mit je einer trommelfesten Aufnahmeeinrichtung und einem Führungsmechanismus für einen dieser zugeordneten Bauteilträger versehen sind.

Nach Anspruch 3 enthalten die Verriegelungseinheiten jeweils separate, in Richtung der Bauteilübergabe zwischen Bauteilträger und Aufnahmeeinrichtung begrenzt hubbewegliche, die Bauteilträger in Förderrichtung verfahrbar aufnehmende Führungsprofile, so daß auf baulich einfache Weise eine exakte Förderbewegung und eine individuelle Hubpositionierung der Bauteilträger erzielbar ist. Aus Gründen einer leichtgängig verschieblichen, im übrigen aber weitgehend spielfreien Lagerung der Bauteilträger in den Führungsprofilen sind diese nach Anspruch 4 vorzugsweise mit Rollenkäfigen bestückt.

Gemäß einer weiteren, besonders bevorzugten Ausgestaltung der Erfindung sind sämtliche, in den Fertigungsbetrieb eingeschleusten Bauteilträger nach Anspruch 5 über individuell freischaltbare Kupplungen zu einem starren Verbund zusammengeschlossen, woraus sich ohne Beeinträchtigung der Einzelaustauschbarkeit eine konstruktiv sehr einfache und störsichere, taktsynchrone Bewegungssteuerung der jeweils den Bauteiltransport übernehmenden Bauteilträger ergibt, wobei die Betätigung der einzelnen Kupplungen steuerungsmäßig mit einer Positionsänderung der Verriegelungseinheiten verknüpft ist.

Nach Anspruch 6 ist zwischen aufeinanderfolgenden Arbeitsstationen zweckmäßigerweise jeweils eine Antriebseinheit zum Anheben und Absenken und zum Vor- und Zurückfördem der Bauteilträger angeordnet. Hierdurch wird eine gleichmäßige Einleitung der Hub- und Förderkräfte längs der gesamten Fertigungsstrecke erreicht und darüber hinaus läßt sich die Hubbewegung der Antriebseinheiten zum individuellen Ein- und Auskuppeln der Bauteilträger ausnutzen und dadurch der zwischen diesen vorhandene Kupplungsmechanismus wesentlich vereinfachen. Dabei enthält die Antriebseinheit nach Anspruch 7 in baulich und funktionsmäßig besonders bevorzugter Weise ein in Hubrichtung steuerbares, den Zwischenraum zwischen benachbarten Verriegelungseinheiten überbrückendes Führungsprofil mit einem reversiblen Fördertrieb sowie einen im Führungsprofil linear verfahrbar abgestützten, beidseitig zwischen aufeinanderfolgende Bauteilträger steuerkommandobetätigt ein- und von diesen selektiv abkuppelbaren Zwischenträger.

Die Erfindung wird nunmehr anhand eines Ausführungsbeispiels in Verbindung mit den Zeichnungen näher erläutert. Es zeigen in stark schematisierter Darstellung:
- **Fig. 1**: einen aus drei aufeinanderfolgenden Arbeitsstationen bestehenden Ausschnitt einer Fertigungsstraße in der Seitenansicht;
- **Fig. 2**: einen Schnitt längs der Linie II-II der Figur 1; und
- **Fig. 3 a, b**: einen Teilschnitt längs der Linie III-III der Fig. 1 im ausbzw. eingekuppeltem Zustand eines Bauteilträgers.

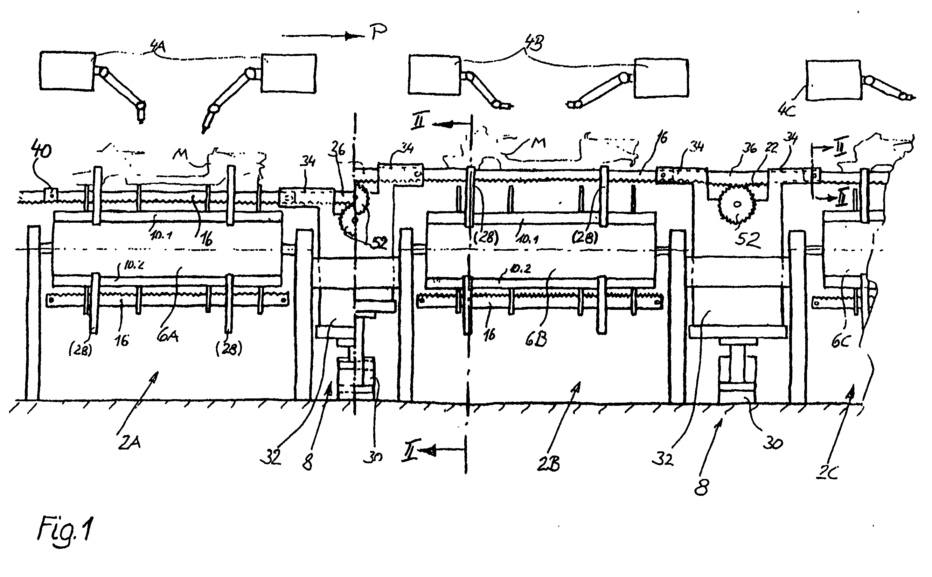

Die in Fig. 1 ausschnittweise im Bereich dreier aufeinanderfolgender Arbeitsstationen 2A, 2B und 2C dargestellte Fertigungsstraße arbeitet nach dem Shuttle-Prinzip und dient zum taktweise fortschreitenden Zusammenschweißen von - in Fig. 1 gestrichelt gezeigten - Kraftfahrzeug-Rohkarosserien M, welche auf der Fertigungsstraße in Pfeilrichtung P nacheinander zu den einzelnen Arbeitsstationen 2 transportiert werden.

Jede Arbeitsstation enthält ein Bearbeitungsgerät, also etwa einen programmierbaren Heftschweißroboter 4A, 4B, 4C sowie eine zugehörige Verriegelungseinheit 6A, 6B bzw. 6C, und zwischen benachbarten Verriegelungseinheiten 6 ist jeweils eine Antriebseinheit 8 angeordnet.

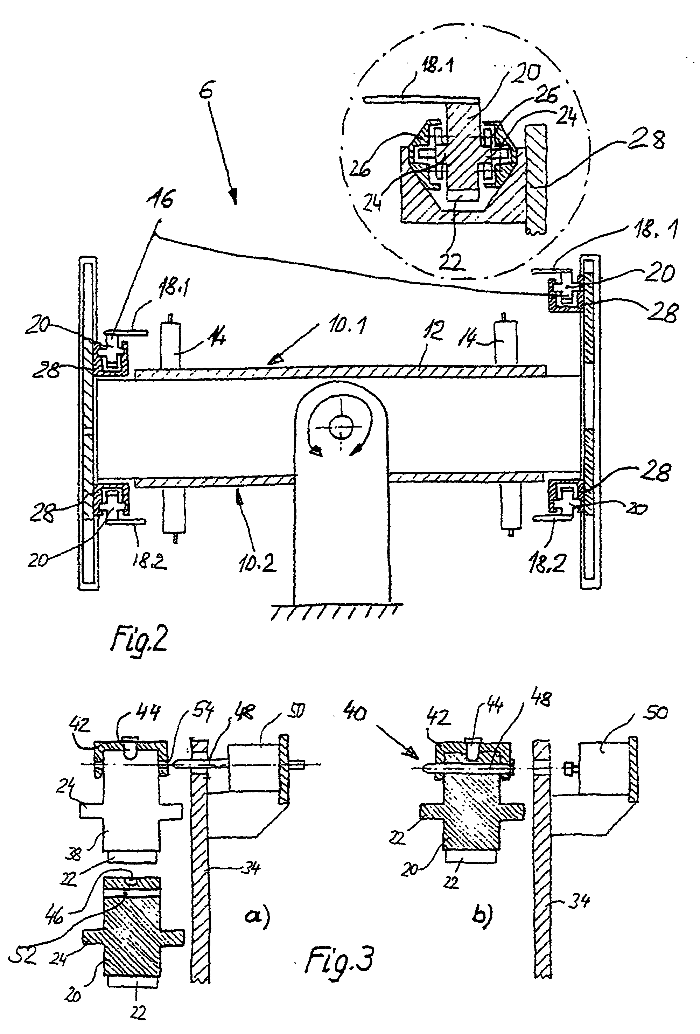

Wie aus Fig. 2 am deutlichsten ersichtlich, sind die einzelnen Verriegelungseinheiten 6 jeweils nach Art eines drehpositionierbaren Trommelmagazins ausgebildet, an welchem an in Trommelumfangsrichtung versetzten Stellen, nämlich bei dem gezeigten Ausführungsbeispiel auf der Ober- und der Unterseite, jeweils eine Aufnahmeeinrichtung 10.1 bzw. 10.2, bestehend aus einer Werkzeugplatte 12 und Zentrierbolzen 14, befestigt ist. Um die Fahrzeugkarosserien M lagegenau an der Arbeitsstation 2 festzuspannen, müssen die Aufnahmeeinrichtungen 10 je nach Karosseriemodell unterschiedlich gestaltet sein. Mit den beiden Aufnahmeeinrichtungen 10.1 und 10.2 lassen sich somit zwei unterschiedliche Karosserietypen an einer Arbeitsstation 2 festspannen. Bei einer größeren Anzahl von Karosseriemodellen sind am Trommetmagazin in Trommelumfangsrichtung verteilt entsprechend viele, bautypenmäßig unterschiedliche Aufnahmeeinrichtungen 10 angeordnet.

Jeder Aufnahmeeinrichtung 10 ist ein Bauteilträger 16 zugeordnet, der mit ebenfalls typenspezifischen Halterungen 18.1 bzw. 18.2 für das gleiche Karosseriemodell wie die zugeordnete Aufnahmeeinrichtung 10.1 bzw. 10.2 versehen ist. Die Bauteilträger 16 bestehen jeweils aus zwei parallelen Tragschienen 20, von denen in Fig. 2 die linke Tragschiene 20 des oberen Bauteilträgers 16 im abgesenkten und die rechte Tragschiene 20 im angehobenen Zustand dargestellt ist, die aber tatsächlich vollkommen bewegungsgleich miteinander verkoppelt sind.

Jede Tragschiene 20 ist auf der Unterseite nach Art einer Zahnstange 22 ausgebildet und beidseitig mit in Schienenlängsrichtung durchgehend verlaufenden Flanschabschnitten 24 versehen, die, wie die vergrößerte Teildarstellung der Fig. 2 am deutlichsten zeigt, in entsprechende Rollenkäfige 26 eingreifen, welche an in Trommellängsrichtung verteilt angeordneten Profilstücken 28 angebracht sind, so daß die Tragschienen 20 an den Profilstücken 28 leichtgängig linear verfahrbar, im übrigen aber weitgehend spielfrei geführt sind. Die Profilstücke 28 und damit auch die Bauteilträger 16 sind am Trommelmagazin 6 begrenzt hubbeweglich gelagert und in der unteren Hubposition z.B. reibschlüssig, unter Hubkrafteinwirkung jedoch lösbar am Trommelmagazin 6 verrastet.

Die Antriebseinheiten 8 enthalten jeweils einen mittels eines Hubaktuators 30 anheb- und absenkbaren Hubschlitten 32 mit starr an diesem befestigten Führungskonsolen 34. In Fig. 1 ist die linke Antriebseinheit 8 teilweise in der unteren und teilweise in der oberen Hubendlage dargestellt. An den Führungskonsolen 34 ist ein Zwischenträger 36 gelagert, der - mit Ausnahme der Halterungen 18 - in gleicher Weise wie die Bauteilträger 16 ausgebildet ist, d.h. aus zwei zueinander parallelen und zu den Tragschienen 20 querschnittsgleichen (in Fig. 3 näher dargestellten) Zwischenschienen 38 besteht, die auf der Schienenunterseite ebenfalls nach Art einer Zahnstange 22 ausgebildet und über seitliche Flanschabschnitte 24 linear verschieblich an (nicht gezeigten) Rollenkäfigen der Führungskonsolen 34 abgestützt sind, wobei die Länge der Zwischenschienen 38 im wesentlichen dem Abstand zwischen benachbarten Verriegelungseinheiten 6 entspricht.

Die Zwischenschienen 38 sind an jedem ihrer Enden über eine in Fig. 3a im aus- und in Fig. 3b im eingerückten Zustand gezeigte Kupplung 40 mit einer angrenzenden Tragschiene 20 des Bauteilträgers 16 verbindbar. Die Kupplungen 40 bestehen jeweils aus einem am Zwischenschienenende befestigten und über dieses hinausstehenden Kupplungsschuh 42, der auf das Tragschienenende aufschiebbar ist und dann über einen am Kupplungsschuh 42 befestigten Zentrierbolzen 44 formschlüssig in eine entsprechende Aufnahmebohrung 46 am Tragschienenende eingreift. Die endgültige, starre Verriegelung zwischen den Schienenstücken 20 und 38 wird durch einen Steckbolzen 48 bewirkt, der mittels eines an der Führungskonsole 34 befestigten, steuerkommandobetätigten Spindeltriebs 50 zum Lösen der Kupplung 40 aus entsprechenden Durchgangsbohrungen 52, 54 der Tragschiene 20 bzw. des Kupplungsschuhs 42 herausziehbar und zum Einrücken der Kupplung 40 in diese einschiebbar und am Kupplungsschuh 42 arretierbar ist, wenn die Durchgangsbohrungen 52, 54 an den Schienenstücken 20, 38 koaxial zum Spindeltrieb 50 ausgerichtet sind.

Im verkuppelten Zustand bilden die Bauteilträger 16 und Zwischenträger 36 somit zwei parallele, durchgehende, starre Schienenstränge, die an den Führungskonsolen 34 der Antriebseinheiten 8 in Schienenlängsrichtung verfahrbar abgestützt und mittels der Hubaktuatoren 30 gemeinsam absenk- und anhebbar und über einen am Hubschlitten 32 angeordneten, reversiblen, mit den Zahnstangenabschnitten 22 beider Schienenstränge zusammenwirkenden Ritzeltrieb 56 in Förderrichtung bewegungsfest miteinander verbunden und hinund hergehend angetrieben sind.

Nachstehend wird die Arbeitsweise der Fertigungsanlage erläutert, wobei zunächst davon ausgegangen wird, daß die Anlage ausschließlich mit Rohkarosserien eines ersten Modelltyps, entsprechend den Aufnahmeeinrichtungen 10.1 und Halterungen 18.1, belegt ist, also die Trommelmagazine 6 mit den Aufnahmeeinrichtungen 10.1 nach oben positioniert sind, und daß sämtliche, mit den Halterungen 18.1 bestückte Bauteilträger 16 im zugeordneten Trommelmagazin 6 unter die Aufnahmeeinrichtungen 10.1 abgesenkt sind, so daß die Rohkarosserien von den Bauteilträgern 16 freigegeben und an den Aufnahmeeinrichtungen 10.1 positionsgenau festgespannt sind. Nach Beendigung des Schweißvorgangs an der jeweiligen Arbeitsstation 2 werden die Bauteilträger 16 über die Hubaktuatoren 30, die Hubschlitten 32 und die Zwischenträger 36 angehoben, so daß sie die Rohkarosserien von den jeweiligen Aufnahmeeinrichtungen 10.1 übernehmen, und in der oberen Hublage durch entsprechende Ansteuerung der Ritzeltriebe 56 zur jeweils nachfolgenden Arbeitsstation 2 vorgefördert, woraufhin die Hubaktuatoren 30 nunmehr in entgegengesetzter Hubrichtung aktiviert werden und die Bauteilträger 16 gemeinsam mit den darauf befindlichen Rohkarosserien in der nachfolgenden Verriegelungseinheit 6 soweit absenken, daß die Rohkarosserien an die dortigen Aufnahmeeinrichtungen 10.1 übergeben und an diesen positionsgenau festgespannt werden, während die Bauteilträger 16 in der unteren Hubendlage von den Karosserien freikommen und mittels der Ritzeltriebe 56 entgegengesetzt zur Fertigungsrichtung P erneut in die zuvor verlassene Verriegelungseinheit 6 zurückgezogen werden und sich dann wieder in der Ausgangsstellung befinden. Der beschriebene Arbeitszyklus wiederholt sich, bis die Rohkarosserien die Arbeitsstationen 2 nacheinander durchlaufen haben und dann fertigverschweißt sind.

Bei einem Modellwnähsel bleiben zwischen aufeinanderfolgenden Karosseriemodellen jeweils ein Bauteilträger 16 und eine Verriegelungseinheit 6 unbesetzt, jedoch wird der Fertigungsprozeß nicht unterbrochen. Als Ausgangszustand sei angenommen, daß sich die Bauteilträger 16 in der angehobenen, vorgeschobenen Position befinden, und zwar ein Bauteilträger 16 mit Halterungen 18.1, beladen mit der letzten Rohkarosserie des ersten Modelltyps, an der Verriegelungseinheit 6C, die noch auf die Aufnahmeeinrichtung 10.1 eingestellt ist, ein unbeladener, mit Halterungen 18.2 für das zweite Karosseriemodell bestückter Bauteilträger 16 an der Verriegelungseinheit 6B, die vom vorausgehenden Arbeitstakt ebenfalls noch auf die Aufnahmeeinrichtung 10.1 eingestellt ist, und ein Bauteilträger 16 mit Halterungen 18.2, beladen mit der ersten Rohkarosserie des zweiten Karosseriemodells, an der bereits auf die Aufnahmeeinrichtung 10.2 umgesteuerten Verriegelungseinheit 6A.

Beim Abwärtshub der Hubaktuatoren 30 werden demzufolge sämtliche Karosserien an eine ihnen jeweils entsprechende Aufnahmeeinrichtung 10 positionsgenau übergeben und dort festgespannt, und der unbeladene Bauteilträger 16 mit den Halterungen 18.2 an der Verriegelungseinheit 6B wird zwar zu einer typenmäßig unterschiedlichen Aufnahmeeinrichtung 10.1 abgesenkt, beim anschließenden Rückwärtslauf der Ritzeltriebe 56 in der unteren Hubendlage jedoch an die ihm zugewiesene Position in der Verriegelungseinheit 6A unter die dortige, typengleiche Aufnahmeeinrichtung 10.2 und die darauf befindliche Rohkarosserie des zweiten Modelltyps zurückbefördert, während gleichzeitig der Bauteilträger 16 mit den Halterungen 18.1 von der Verriegelungseinheit 6C zur Verriegelungseinheit 6B und damit ebenfalls zu der zugeordneten, bautypengleichen Aufnahmeeinrichtung 10.1 zurücktransportiert wird. Nunmehr werden die Kupplungen 40 an beiden Enden des Bauteilträgers 16 in der Verriegelungseinheit 6B gelöst und diese wird umgesteuert, so daß deren Aufnahmeeinrichtung 10.2 und zusammen mit dieser - nach dem steuerkommandobetätigten Einrücken der Kupplungen 40 - der zugeordnete Bauteilträger 16 mit Halterungen 18.2 des zweiten Bautyps in den Fertigungsablauf eingeschleust werden. Nach Beendigung des Schweißtaktes und dem Anheben und Vorschieben der Bauteilträger 16 wird erneut der oben beschriebene Ausgangszustand, nunmehr in Fertigungsrichtung P um eine Arbeitsstation 2 versetzt, erreicht, d.h. ein unbeladener Bauteilträger 16 mit Halterungen 18.2 befindet sich jetzt an der (noch nicht umgestellten) Verriegelungseinheit 6C, während an den bereits auf das zweite Karosseriemodell umgesteuerten Verriegelungseinheiten 6A und 6B jeweils ein mit diesem Karosseriemodell beladener und entsprechend typenspezifischer Bauteilträger 16 positioniert ist

## Patentansprüche

1. Fertigungsstraße zur schrittweisen Bauteilebearbeitung, insbesondere zum schrittweisen Zusammenbau von Kraftfahrzeug-Rohkarosserien (M), mit mehreren, im Zuge der Fertigungsstraße nacheinander angeordneten Arbeitsstationen (2A,2B,2C), an denen die Bauteile während des Arbeitsvorgangs jeweils an einer Verriegelungseinheit einschließlich einer bauteilespezifischen Aufnahmeeinrichtung positionsgenau fixiert werden, sowie mit die Bauteile an den einzelnen Arbeitsstationen von der Aufnahmeeinrichtung übernehmenden, zur nachfolgenden Arbeitsstation transportierenden und an die dortige Aufnahmeeinrichtung übergebenden, jeweils mit ebenfalls bauteitespezifischen Halterungen (18.1, 18.2) versehenen Bauteilträgern, **dadurch gekennzeichnet, daß**
jede Verriegelungseinheit (6) mehrere Bauteilträger (16) mit jeweils für einen unterschiedlichen Bauteiltyp ausgebildeten Halterungen (18.1, 18.2) sowie mehrere, jeweils einem der Bauteilträger zugeordnete und entsprechend bauteiltypenabhängig unterschiedliche Aufnahmeeinrichtungen (10.1, 10.2) enthält und in Abhängigkeit von dem die Fertigungsstraße durchlaufenden Bauteiletyp auf unterschiedliche, den Bauteilträger mit den jeweils bauteiltypischen Halterungen und die jeweils bauteiltypische Aufnahmeeinrichtung im Zuge der Fertigungsstraße positionierenden Arbeitsstellungen umsteuerbar ist, und daß die von den Verriegelungseinheiten (6) in den Fertigungsablauf eingeschleusten Bauteilträger zusammen mit den an ihren Halterungen fixierten Bauteilen zur jeweils nachfolgenden Arbeitsstation (2) vor- und nach der Bauteilübergabe entgegen der Fertigungsrichtung (P) an die dem jeweiligen Bauteilträger bautypenabhängig zugeordnete Aufnahmeeinrichtung in der zuvor verlassenen Verriegelungseinheit zurückförderbar sind.

2. Fertigungsstraße nach Anspruch 1, **dadurch gekennzeichnet, daß**
die Verriegelungseinheiten (6) nach Art eines drehpositionierbaren Trommelmagazins ausgebildet sind und an in Trommelumfangsrichtung aufeinanderfolgenden Stellen mit je einer trommelfesten Aufnahmeeinrichtung (10.1, 10.2) und einem Führungsmechanismus (26, 28) für einen dieser zugeordneten Bauteilträger (16) versehen sind.

3. Fertigungsstraße nach Anspruch 1 oder 2, **dadurch gekennzeichnet, daß**
die Verriegelungseinheiten jeweils separate, in Richtung der Bauteilübergabe zwischen Bauteilträger (16) und Aufnahmeeinrichtung (10) begrenzt hubbewegliche, die Bauteilträger in Förderrichtung verfahrbar aufnehmende Führungsprofile (28) enthalten.

4. Fertigungsstraße nach Anspruch 3, **dadurch gekennzeichnet, daß**
die Führungsprofile (28) mit Rollenkäfigen (26) bestückt sind.

5. Fertigungsstraße nach einem der vorhergehenden Ansprüche, **dadurch gekennzeichnet, daß**
die Bauteilträger (16) über individuell freischaltbare Kupplungen (40) hub- und in Förderrichtung verschiebefest miteinander verbunden sind.

6. Fertigungsstraße nach einem der vorhergehenden Ansprüche, **dadurch gekennzeichnet, daß**
zwischen aufeinanderfolgenden Arbeitsstationen (2) jeweils eine Antriebseinheit (8) zum Anheben und Absenken und zum Vor- und Zurückfordern der Bauteilträger (16) angeordnet ist.

7. Fertigungsstraße nach Anspruch 6, **dadurch gekennzeichnet, daß**
die Antriebseinheit (8) ein in Hubrichtung steuerbares, den Zwischenraum zwischen benachbarten Verriegelungseinheiten (6) überbrückendes Führungsprofil (32, 34) mit einem reversiblen Fördertrieb (56) sowie einen im Führungsprofil linear verfahrbar abgestützten, steuerkommandobetätigt zwischen aufeinanderfolgende Bauteilträger (16) ein- und von diesen selektiv abkuppelbaren Zwischenträger (36) enthält.

## Claims

1. A production line for stepwise machining of components, especially for stepwise assembly of car body shells (M), comprising a number of work stations (2A, 2B, 2C) disposed in succession along the production line, at which the components during the machining operation are fixed in the exact position to a locking unit including a receiving device specific to the component, the production line also comprising carriers which convey the components from the receiving device to the individual work stations, move them to the next work station and deliver them to the receiving device there, each component carrier being equipped with holders (18.1, 18.2) which are likewise specific to the components, **characterised in that**
each locking unit (6) comprises a number of component carriers (16) each with holders (18.1, 18.2) designed for a different type of component, and a number of receiving devices (10.1, 10.2), each allocated to a respective holder and correspondingly differing by types and, in dependence on the type of component passing through the production line, can be changed over to different work positions for positioning the component carriers and the respective types of holders and the respective types of receiving device along the production line, and the component carriers introduced by the locking units (6) into the production sequence, together with the components fixed to their holders in the next work station (2), can be conveyed back, before and after the transfer of components, in the opposite direction to the production direction (P), to the receiving device in the previously abandoned locking unit associated with the holder for the respective type of component.

2. A production line according to claim 1, **characterised in that** the locking units (6) are in the form of a rotary positionable drum magazine and are provided at successive places in the drum peripheral direction with respective receiving devices (10.1, 10.2) secured to the drum and with a guide mechanism (26, 28) for each associated component carrier (16).

3. A production line according to claim 1 or 2, **characterised in that** the locking units each contain separate guide profiles (28) movable in reciprocation to a limited extent in the direction for transferring components between component carriers (16) and receivers (10) and receiving the component carriers so as to move them in the conveying direction.

4. A production line according to claim 3, **characterised in that** the guide profiles (28) are equipped with roller cages (26).

5. A production line according to any of the preceding claims, **characterised in that** the component carriers (16) are interconnected by individual and independently switchable couplings (40) so as to be resistant to reciprocating motion and displacement in the conveying direction.

6. A production line according to any of the preceding claims, **characterised in that** between each pair of successive work stations (2) a drive unit (8) is provided for raising and lowering the component carriers (16) and moving them forward and back.

7. A production line according to claim 6, **characterised in that** the drive unit (8) contains a drive profile (32, 34) controllable in the stroke direction and bridging the gap between neighbouring locking units (6) and with a reversible conveying drive (56), together with an intermediate carrier (36) which is supported and linearly movable in the guide profile and can be selectively coupled and uncoupled between successive component carriers (16), actuated by a control command.

## Revendications

1. Chaîne de fabrication pour le travail de pièces pas-à-pas, en particulier pour l'assemblage pas-à-pas de carrosseries brutes de véhicules automobiles (M), comprenant plusieurs stations de travail (2A, 2B, 2C) disposées les unes après les autres sur le trajet de la chaîne de fabrication, dans lesquelles, pendant le processus de travail, les pièces sont fixées dans une position précise chacune à une unité de verrouillage, qui comprend un dispositif de réception particulier à la pièce, ainsi que des supports de pièces, qui prélèvent les pièces sur le dispositif de réception aux différentes stations de travail, les transportent à la station de travail suivante et les transfèrent au dispositif de réception qui s'y trouve, chaque support étant muni de montures (18.1, 18.2), elles aussi particulières à la pièce,
**caractérisée en ce que**
chaque unité de verrouillage (6) comprend plusieurs supports de pièces (16) ayant chacun des montures (18.1, 18.2) conformées chacune pour un type de pièce différent, ainsi que plusieurs dispositifs de réception (10.1, 10.2) associés chacun à l'un des supports de pièces et qui diffèrent en conséquence selon le type de pièce et, en fonction du type de pièces qui parcourt la chaîne de fabrication, elle peut être inversée sur différentes positions de travail qui positionnent le support de pièces, avec les montures à chaque fois typiques de la pièce, et avec le dispositif de réception à chaque fois typique de la pièce sur la longueur de la chaîne de fabrication, et les supports de pièces introduits sur le parcours de fabrication par les unités de verrouillage (6) peuvent être renvoyés, avec les pièces fixées à leurs montures destinées à la station de travail (2) respectivement suivante, avant et après le transfert de la pièce, en sens inverse du sens de fabrication (P), au dispositif de réception correspondant au support de pièce concerné sous le rapport du type de construction, qui est contenu dans l'unité de verrouillage qu'ils ont quittée précédemment.

2. Chaîne de fabrication selon la revendication 1,
**caractérisée en ce que**
les unités de verrouillage (6) sont réalisées à la façon d'un tambour magasin pouvant être positionné en rotation et sont munies chacune, à des endroits qui se succèdent dans la direction de la périphérie du tambour, d'un dispositif de réception (10.1, 10.2) solidaire du tambour et d'un mécanisme de guidage (26, 28) pour un support de pièce (16) associé à ce dispositif.

3. Chaîne de fabrication selon la revendication 1 ou 2,
**caractérisée en ce que**
les unités de verrouillage comprennent à chaque fois des profilés de guidage séparés (28), mobiles en élévation sur une distance limitée selon la direction du transfert des pièces entre support de pièce (16) et dispositif de réception (10), et qui reçoivent les supports de pièces mobiles en translation dans la direction du transport.

4. Chaîne de fabrication selon la revendication 3,
**caractérisée en ce que**
les profilés de guidage (28) sont équipés de cages à rouleaux (26).

5. Chaîne de fabrication selon une des revendications précédentes,
**caractérisée en ce que**
les supports de pièces (16) sont reliés entre eux solidairement en translation dans la direction de l'élévation et dans la direction du transport par l'intermédiaire d'accouplements (40) qui peuvent être dégagés individuellement.

6. Chaîne de fabrication selon une des revendications précédentes,
**caractérisée en ce que**
dans chaque intervalle entre stations de travail (2) successives, est disposée une unité d'entraînement (8) servant à élever et à abaisser et à transporter les supports de pièces (16) dans le sens de l'avance et du retour.

7. Chaîne de fabrication selon la revendication 6,
**caractérisée en ce que**
l'unité d'entraînement (8) comprend un profilé de guidage (32, 34) qui peut être commandé dans la direction de l'élévation et qui couvre l'espace intermédiaire entre unités de verrouillage (6) adjacentes, ce profilé comprenant un entraînement de transport réversible (56), ainsi qu'un support intermédiaire (36), qui prend appui dans le profilé de guidage en étant mobile en translation linéaire, actionné par ordre de commande entre des supports de pièces successifs (16), et qui peut être accouplé et désaccouplé sélectivement par rapport à ce support.
